(19) Europäisches Patentamt
European Patent Office
Office européen des brevets

(11) **EP 2 758 788 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **12743729.1**

(22) Anmeldetag: **03.08.2012**

(51) Int Cl.:
*G01P 3/487* (2006.01)　　　*G01D 5/14* (2006.01)
*H02P 6/16* (2016.01)　　　*H02P 21/18* (2016.01)

(86) Internationale Anmeldenummer:
**PCT/EP2012/065283**

(87) Internationale Veröffentlichungsnummer:
**WO 2013/041287 (28.03.2013 Gazette 2013/13)**

(54) **VERFAHREN UND VORRICHTUNG ZUR BESTIMMUNG DER ROTORPOSITION UND DER DREHZAHL EINER DREHFELDMASCHINE**

METHOD AND DEVICE FOR DETERMINING THE ROTOR POSITION AND SPEED OF A ROTATING FIELD MACHINE

PROCÉDÉ ET DISPOSITIF POUR DÉTERMINER LA POSITION ET LA VITESSE DE ROTATION DU ROTOR D'UN GÉNÉRATEUR À INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2011 DE 102011083019**

(43) Veröffentlichungstag der Anmeldung:
**30.07.2014 Patentblatt 2014/31**

(73) Patentinhaber: **Robert Bosch GmbH
70442 Stuttgart (DE)**

(72) Erfinder:
• **GABERAN, Thomas
F-01000 St Denis Les Bourg (FR)**
• **BRAUN, Martin
72149 Neustetten-Wolfenhausen (DE)**
• **SCHMITT, Gilles
NL-2582 KV 'S Gravenhage (The Hague) (NL)**

(56) Entgegenhaltungen:
**DE-A1- 19 735 581 DE-A1- 19 949 106**

• **STIKA I C ET AL: "A new cost effective solution for control of electrical actuators", ADVANCED TOPICS IN ELECTRICAL ENGINEERING (ATEE), 2011 7TH INTERNATIONAL SYMPOSIUM ON, IEEE, 12. Mai 2011 (2011-05-12), Seiten 1-4, XP031893773, ISBN: 978-1-4577-0507-6**
• **SANDEE J H ET AL: "Analysis and experimental validation of a sensor-based event-driven controller", AMERICAN CONTROL CONFERENCE, 2007. ACC '07, IEEE, PISCATAWAY, NJ, USA, 9. Juli 2007 (2007-07-09), Seiten 2867-2874, XP031215183, ISBN: 978-1-4244-0988-4**

**Beschreibung**

Stand der Technik

Die vorliegende Erfindung bezieht sich auf ein Verfahren und eine Vorrichtung zur Bestimmung der Rotorposition und der Drehzahl einer Drehfeldmaschine und auf eine Drehfeldmaschine.

DE 11 2008 001 818 T5 beschreibt eine elektrische Motorsteuerung zur Bestimmung der Drehposition des Motors basierend auf an den Motor angelegten elektrischen Spannungen und Strömen.

Die Schrift STIKA I C ET AL: "A new cost effective solution for control of electrical actuators", ADVANCED TOPICS IN ELECTRICAL ENGINEERING (ATEE), 2011 7TH INTERNATIONAL SYMPOSIUM ON, IEEE, 12. Mai 2011, Seiten 1-4, XP031893773, ISBN: 978-1-4577-0507-6, beschreibt eine Bestimmung einer Drehzahl eines Gleichstrommotors basierend auf Hallsensorsignalen und unter Verwendung eines Beobachters.

Die Schrift SANDEE J H ET AL: "Analysis and experimental validation of a sensor-based event-driven controller", AMERICAN CONTROL CONFERENCE, 2007. ACC '07, IEEE, PISCATAWAY, NJ, USA, 9. Juli 2007, Seiten 2867-2874, XP031215183, ISBN: 978-1-4244-0988-4, befasst sich mit einem Drehstrommotor und offenbart die Verwendung eines Beobachters zum Analysieren des Drehstrommotors.

DE 199 49 106 A1 befasst sich mit einem Verfahren zur Drehzahlmessung, insbesondere an bürstenlosen Gleichstrommotoren.

DE 197 35 581 A1 befasst sich mit dem Regeln eines elektronisch kommutierten Gleichstrommotors als Antriebsmotor einer Spuleinrichtung einer Textilmaschine. In den Regelkreis zur Regelung der Motordrehzahl wird ein sogenannter Beobachter geschaltet.

Offenbarung der Erfindung

Vor diesem Hintergrund werden mit der vorliegenden Erfindung Verfahren zur Bestimmung der Rotorposition und der Drehzahl einer Drehfeldmaschine, weiterhin Vorrichtungen, die diese Verfahren verwenden sowie schließlich ein entsprechendes Computerprogrammprodukt gemäß den unabhängigen Ansprüchen vorgestellt. Vorteilhafte Ausgestaltungen ergeben sich aus den jeweiligen abhängigen Ansprüchen und der nachfolgenden Beschreibung. Mittels Hall-Sensoren und einer Beobachterstruktur kann eine störsichere Bestimmung der Rotorposition und der Drehzahl einer Drehfeldmaschine durchgeführt werden. Die Drehfeldmaschine kann beispielsweise für einen elektrischen Turboverdichter vorgesehen sein. Dabei kann die Drehzahl unter Einsatz eines Beobachters bestimmt werden.

Durch den Beobachter kann vermieden werden, dass ein Auftreten von Störungen in den Hall-Signalen zu Fehlern bei der Drehzahlberechnung und somit zu Störungen in der Rotorposition führt. Auch kann vermieden werden, dass eine Statorstromregelung und eine Drehzahlregelung der Drehfeldmaschine durch auftretende Störungen instabil werden, was zu Fehlfunktionen und zum Abschalten des Turboverdichters führen könnte. Auch ermöglicht es der Beobachter kleine Drehzahlen sehr genau und ohne starke Schwankungen geregelt zu fahren. Zudem kann vermieden werden, dass zwischen der berechneten Drehzahl und der Rotorposition eine unzulässige Phasenverschiebung auftritt, die mit statischen Filtern korrigiert werden müsste.

Die vorliegende Erfindung schafft ein Verfahren zur Bestimmung der Rotorposition und der Drehzahl einer Drehfeldmaschine, das die folgenden Schritte umfasst:

Ermitteln eines Sektors in dem sich ein Rotor der Drehfeldmaschine befindet, basierend auf Hallsensorsignalen, wobei die Hallsensorsignale von im Bereich des Rotors angeordneten Hallsensoren ausgegebene Signale repräsentieren;

Ermitteln einer vorläufigen Drehzahl der Drehfeldmaschine, basierend auf den Hallsensorsignalen; und

Bestimmen der Rotorposition und der Drehzahl basierend auf dem Sektor und der vorläufigen Drehzahl, wobei zumindest zum Bestimmen der Drehzahl ein Beobachter der Drehfeldmaschine eingesetzt wird.

Bei der Drehfeldmaschine kann es sich um einen Elektromotor handeln, der mit einem Mehrphasenwechselstrom betrieben wird. Üblicherweise handelt es sich dabei um einen Dreiphasenwechselstrom. Durch den Mehrphasenwechselstrom werden mit Hilfe von Spulen Magnetfelder generiert, die ein Drehmoment auf den Rotor der Drehfeldmaschine ausüben und dadurch eine Drehbewegung des Rotors in Bezug auf einen Stator der Drehfeldmaschine bewirken. Eine vollständige Umdrehung des Rotors stellt einen Kreis dar, der in mehrere Sektoren unterteilt werden kann, so dass der Rotor bei einer vollständigen Umdrehung die mehreren Sektoren durchläuft. Dabei kann die Anzahl der Sektoren der Anzahl der Phasen des Mehrphasenwechselstroms entsprechen. Bei einer Anzahl von drei Sektoren kann jedem Sektor ein Winkelsegment von 120° einer Vollumdrehung des Rotors zugeordnet sein, so dass alle Sektoren aneinandergereiht einen Vollkreis ergeben. Ein Sektorenwechsel kann stattfinden, wenn sich aufgrund der Drehung des Rotors ein an dem Rotor angeordneter Bezugspunkt von einem Sektor in einen angrenzenden Sektor bewegt. Der Rotor kann ausgebildet sein, um ein Magnetfeld zu erzeugen. Bei dem Rotor kann es sich um eine Welle mit einem Dauermagneten handeln. Eine Anzahl der Hallsensoren kann der halben Anzahl an Sektoren entsprechen. Jeder der Hallsensoren kann ausgebildet sein, um eine Richtung eines Magnetfelds des Rotors zu erfassen. Jeder Hallsensor ist ausgebildet, um ein Hallsensorsignal auszugeben, dass eine Richtung des Magnetfelds des Rotors in Bezug auf den jeweiligen Hallsensor abbilden kann. So kann ein Hallsensorsignal einen ersten Wert aufweisen, wenn das Magnetfeld in Bezug auf den Hallsensor eine erste Richtung aufweist und einen zweiten Wert aufweisen, wenn das Magnetfeld in Bezug auf den Hallsensor eine zweite Richtung aufweist. Der Sektor, in dem sich der Rotor aktuell befindet, kann unter Kenntnis einer Anordnung der Hallsensoren durch eine Auswertung der Werte der Hallsensorsignale ermittelt werden. Die vorläufige Drehzahl kann basierend auf Signalflanken, die ein Umschalten zwischen dem ersten und dem zweiten Wert eines Hallsensorsignals bewirken, ausgewertet werden. Bei der vorläufigen Drehzahl kann es sich um eine Drehzahl des Rotors handeln, die aus den Hallsensorsignalen, beispielsweise durch Differentiation, bestimmt wird. Bei der Rotorposition kann es sich um eine Stellung des Rotors, beispielsweise relativ zu einem am Stator angeordneten Bezugspunkt handeln. Der Beobachter kann ein Modell der Drehfeldmaschine umfassen. Es kann sich um einen Zustandsbeobachter handeln. Beispielsweise kann das Modell den mechanischen Teil der Drehfeldmaschine nachbilden. Es kann sich um einen vollständigen Beobachter, beispielsweise um einen Luenberger-Beobachter handeln. Als Eingangsgrößen können dem Beobachter Messgrößen oder aus Messgrößen bestimmte Werte zugeführt werden. Als Ausgangsgröße kann der Beobachter zumindest einen Wert für die Drehzahl ausgeben. Durch die von dem Beobachter ausgegebene Drehzahl kann die Drehzahl des Rotors genauer als durch die vorläufige Drehzahl angegeben werden. Somit wird eine Methode zur störsicheren Bestimmung der Rotorposition und der Drehzahl einer Drehfeldmaschine, beispielsweise für einen elektrischen Turboverdichter, mittels Hall-Sensoren geschaffen. Die störsicher bestimmte Rotorposition und die störsicher bestimmte Drehzahl ermöglichen eine saubere Sinusbestromung und somit eine stabile Drehzahlregelung bei kleinen Drehzahlen.

Gemäß einer Ausführungsform kann das Verfahren einen Schritt des Ermitteins einer Drehrichtung des Rotors basierend auf den Hallsensorsignalen umfassen. Im Schritt des Bestimmens kann die Rotorposition basierend auf dem Sektor, der Drehrichtung und der Drehzahl bestimmt werden. Die Drehzahl kann unter Einsatz des Beobachters basierend auf der vorläufigen Drehzahl und einem, ein Drehmoment des Rotors bewirkenden, Strom bestimmt werden. Die Drehrichtung kann aus einer Auswertung einer Abfolge der Werte der Hallsensorsignale ermittelt werden. Bei dem Strom kann es sich um einen Strom in q-Richtung handeln. Die q-Richtung kann sich dabei auf ein rotorbezogenes d-q-System beziehen, dass durch geeignete Transformationen aus einem statorbezogenen mehrphasigen System berechnet werden kann. Durch ein Einstellen des Stroms in q-Richtung kann das Drehmoment der Drehfeldmaschine eingestellt werden. Der Beobachter kann hier einen Drehzahlbeobachter darstellen, der als Ausgangsgröße die Drehzahl ausgibt. Dadurch kann die Drehzahl sehr störsicher bestimmt werden. Indem die von dem Beobachter ausgegebene Drehzahl in die Bestimmung der Rotorposition mit einfließt, kann die Rotorposition ebenfalls sehr störsicher bestimmt werden.

Dabei kann im Schritt des Bestimmens die Rotorposition basierend auf einer Aufsummierung der Drehzahl bestimmt werden. Die Aufsummierung kann durch Integration erfolgen. Dabei kann eine Änderung des Sektors jeweils zu einer Rücksetzung der Aufsummierung führen. Dadurch kann die Rotorposition sehr genau bestimmt werden.

Gemäß einer weiteren Ausführungsform umfasst das Verfahren einen Schritt des Ermitteins einer Beschleunigung des Rotors basierend auf den Hallsensorsignalen. Im Schritt des Bestimmens können die Rotorposition und die Drehzahl unter Einsatz des Beobachters basierend auf dem Sektor, der vorläufigen Drehzahl und der Beschleunigung bestimmt werden. Durch die Beobachtung der Rotorposition und der Drehzahl können beide Parameter sehr genau bestimmt werden.

Dabei können im Schritt des Bestimmens die Rotorposition und die Drehzahl bei einem Wechsel des Sektors basierend auf dem Sektor und der vorläufigen Drehzahl und sonst basierend auf einer unter Einsatz des Beobachters bestimmten und rückgeführten Rotorposition und einer unter Einsatz des Beobachters bestimmten und rückgeführten Drehzahl bestimmt werden. Auf diese Weise kann bei einem Sektorwechsel auf Werte zurückgegriffen werden, die aus den Hallsensorsignalen ermittelt worden sind. Liegt dagegen kein Sektorwechsel vor, so kann auf die durch den Beobachter ermittelten Werte zurückgegriffen werden. Dadurch stehen stets genaue Werte als Eingangsgrößen für den Beobachter zur Verfügung.

Gemäß einer Ausführungsform kann das Verfahren einen Schritt des Empfangens und Plausibilisierens der Hallsensorsignale umfassen. Dadurch können die Eintreffenden Hallsensorsignale überprüft werden. Die Plausibilisierung kann beispielsweise eine Tiefpassfilterung umfassen. Gestörte Hallsignale können von einer weiteren Auswertung ausgeschlossen oder korrigiert werden. Auf diese Weise kann vermieden werden, dass Störeffekte die weitere Auswertung verfälschen.

Ferner kann im Schritt des Ermittelns des Sektors der Sektor basierend auf einer zeitlichen Abfolge der Hallsensorsignale ermittelt werden. Im Schritt des Ermittelns der vorläufigen Drehzahl kann die vorläufige Drehzahl aus einer zeitlichen Differenz zwischen aufeinanderfolgenden Flanken der Hallsensorsignale ermittelt werden. Beispielsweise kann ein Flankenwechsel eines oder mehrerer der Hallsensorsignale auf eine Änderung eines Sektors hindeuten. Die vorläufige Drehzahl kann durch eine Differentiation der Hallsensorsignale bestimmt werden. Somit kann zunächst auf bekannte Methoden zur Ermittlung des Sektors und der vorläufigen Drehzahl zurückgegriffen werden.

Die vorliegende Erfindung schafft ferner eine Vorrichtung zur Bestimmung der Rotorposition und der Drehzahl einer Drehfeldmaschine, wobei die Vorrichtung ausgebildet ist, um die Schritte eines Verfahrens gemäß einer Ausführungsform der vorliegenden Erfindung durchzuführen. Die Vorrichtung ist ausgebildet, um die Schritte des Verfahrens in entsprechenden Einrichtungen durchzuführen bzw. umzusetzen. Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Die vorliegende Erfindung schafft ferner eine Drehfeldmaschine, mit folgenden Merkmalen:

einem Rotor;

einem Stator mit zumindest drei Hallsensoren, wobei jeder der Hallsensoren ausgebildet ist, um eine Richtung eines Magnetfelds des Rotors zu erfassen und abhängig von der Richtung ein Hallsensorsignal auszugeben; und

einer Vorrichtung zur Bestimmung der Rotorposition und der Drehzahl einer Drehfeldmaschine basierend auf den von den zumindest drei Hallsensoren ausgegebenen Hallsensorsignalen.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Unterschiedliche Ausführungsformen des erfindungsgemäßen Ansatzes ermöglichen die Berechnung von störsicheren Signalen für die Rotorposition und die Drehzahl einer Drehfeldmaschine aus gemessenen Hall-Signalen einer Drehfeldmaschine, beispielsweise für einen Turboverdichter. Insgesamt lassen sich sehr störsichere und robuste Signale für die Rotorposition und die Drehzahl der Drehfeldmaschine erhalten. Dadurch können auch sehr kleine Drehzahlen geregelt realisiert werden. Die Statorstrom- und Drehzahlregelung wird nicht mehr unzulässig durch Störungen beeinflusst und befindet sich somit dauerhaft im stabilen Bereich.

Die Erfindung wird nachstehend anhand der beigefügten Zeichnungen beispielhaft näher erläutert. Es zeigen:

Fig. 1      eine schematische Darstellung einer Drehfeldmaschine;

Fig. 2      eine Darstellung von Hallsensorsignalen;

Fig. 3      zeigt ein Blockschaltbild einer Vorrichtung zur Bestimmung der Rotorposition und der Drehzahl einer Drehfeldmaschine;

Fig. 4      ein Blockschaltbild einer Vorrichtung zur Bestimmung der Rotorposition und der Drehzahl einer Drehfeldmaschine gemäß einem Ausführungsbeispiels der vorliegenden Erfindung;

Fig. 5      ein Drehzahlbeobachter gemäß einem Ausführungsbeispiels der vorliegenden Erfindung;

Fig. 6      ein Blockschaltbild einer weiteren Vorrichtung zur Bestimmung der Rotorposition und der Drehzahl gemäß einem Ausführungsbeispiels der vorliegenden Erfindung; und

Fig. 7      ein Ablaufdiagramm eines Verfahrens zur Bestimmung der Rotorposition und der Drehzahl gemäß einem Ausführungsbeispiels der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

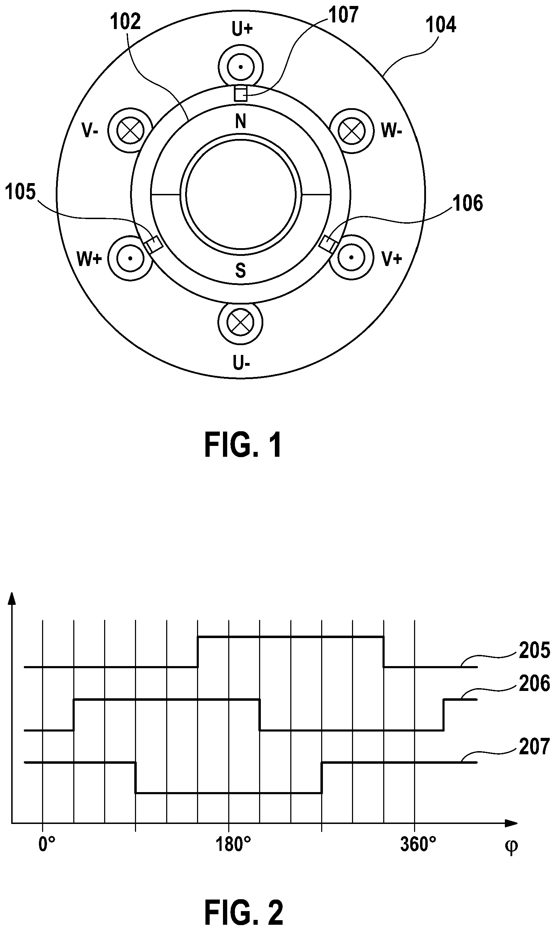

Fig. 1 zeigt eine schematische Darstellung einer Drehfeldmaschine mit einem Rotor 102 und einem Stator 104. Der Rotor 102 ist innerhalb des Stators 104 drehbar gelagert und stellt mindestens ein Polpaar mit einem magnetischen Südpol und einem magnetischen Nordpol dar. Der Stator 104 weist mindestens drei getrennte Statorwicklungen W, V, U auf. In einem Spalt zwischen dem Rotor 102 und dem Stator 104 sind drei Hallsensoren 105, 106, 107 angeordnet. Die Hallsensoren 105, 106, 107 sind fest mit dem Stator 104 verbunden. Die Hallsensoren 105, 106, 107 sind gleichmäßig um einen Umfang des Rotors 102 herum verteilt angeordnet, wobei jeweils einer der Hallsensoren 105, 106, 107 einer der Statorwicklungen zugeordnet ist. Der Rotor 102 kann sich an den Hallsensoren 105, 106, 107 vorbei bewegen.

Zur hochdynamischen feldorientierten Strom- und Drehzahlregelung eines elektrischen Turboverdichters, wie er schematisch in Fig. 1 gezeigt ist, ist die Kenntnis der Drehzahl des Rotors 102 und der Rotorposition, also der Stellung des Rotors 102 in Bezug auf den Stator 104 erforderlich. Hierbei ist es insbesondere erforderlich, dass die Rotorposition im Stillstand und bei kleinen Drehzahlen im Drehzahlbereich bis 10% der Nenndrehzahl möglichst präzise ermittelt wird um eine saubere Sinusbestromung zu realisieren. Im Bereich höherer Drehzahlen, größer als 10% der Nenndrehzahl, werden die Drehzahl und die Rotorposition üblicherweise geberfrei ermittelt. Die Drehzahl und die Rotorposition können im Bereich kleiner Drehzahlen entweder über mechanische oder optische Drehgeber oder über die Hall-Sensoren 105, 106, 107 ermittelt werden. Dabei wird mithilfe der Hall-Sensoren 105, 106, 107 die Richtung des magnetischen Feldes des Rotors 102 detektiert und daraus die Drehzahl und die Rotorposition berechnet.

Fig. 2 zeigt in Bezug auf Fig. 1 beispielhaft ein resultierendes Signalmuster, das von den in Fig. 1 gezeigten Hall-Sensoren 105, 106, 107 bei einer Drehung des Rotors 102 erzeugt wird. Gezeigt ist ein erstes Signal 205 des Hall-Sensors 105, ein zweites Signal 206 des Hall-Sensors 106 und ein drittes Signal 207 des Hall-Sensors 107. Auf der Abszisse ist die Winkelstellung des Rotors 102 oder die Rotorposition in Grad aufgetragen. Die Rotorposition 0° entspricht einer Ausgangsposition und die Rotorposition 360° einer vollen Umdrehung. Auf der Ordinate sind Werte der Signale 205, 206, 207 aufgetragen. Jedes der Signale 205, 206, 207 kann zwei Werte annehmen. Ein erster der Werte zeigt dabei eine erste von dem Rotor 102 hervorgerufene Magnetfeldrichtung und ein zweiter der Werte zeigt eine zweite von dem Rotor 102 hervorgerufene Magnetfeldrichtung an.

Bei der Rotorposition von 0° ist der Hall-Sensor 107 im Einflussbereich des Nordpols des Rotors 102 und die Hall-Sensoren 105, 106 im Einflussbereich des Südpols des Rotors 102 angeordnet. Somit weist das dritte Signal 207 den zweiten Wert und die Signale 205, 206 den ersten Wert auf. Bei einer Drehung des Rotors 102 im Uhrzeigersinn findet bei einer Rotorposition von 30° ein Flankenwechsel des zweiten Signals 206 von dem ersten auf den zweiten Wert statt, da der Hall-Sensor 106 in den Einflussbereich des Nordpols des Rotors 102 gelangt. Bei einer weiteren Drehung des Rotors 102 findet bei einer Rotorposition von 90° ein Flankenwechsel des dritten Signals 207 von dem zweiten auf den ersten Wert statt, da der Hall-Sensor 107 in den Einflussbereich des Südpols des Rotors 102 gelangt. Bei einer weiteren Drehung des Rotors 102 findet bei einer Rotorposition von 150° ein Flankenwechsel des ersten Signals 205 von dem ersten auf den zweiten Wert statt, da der Hall-Sensor 105 in den Einflussbereich des Nordpols des Rotors 102 gelangt. Bei einer weiteren Drehung des Rotors 102 findet bei einer Rotorposition von 210° ein Flankenwechsel des zweiten Signals 206 von dem zweiten auf den ersten Wert statt, da der Hall-Sensor 106 in den Einflussbereich des Südpols des Rotors 102 gelangt. Bei einer weiteren Drehung des Rotors 102 findet bei einer Rotorposition von 270° ein Flankenwechsel des dritten Signals 207 von dem ersten auf den zweiten Wert statt, da der Hall-Sensor 107 wieder in den Einflussbereich des Nordpols des Rotors 102 gelangt. Bei einer weiteren Drehung des Rotors 102 findet bei einer Rotorposition von 330° ein Flankenwechsel des ersten Signals 205 von dem zweiten auf den ersten Wert statt, da der Hall-Sensor 105 in den Einflussbereich des Südpols des Rotors 102 gelangt.

Ein Sektorwechsel des Rotors 102 kann beispielsweise jeweils durch eine steigende Flanke, von dem ersten auf den zweiten Wert, eines der Signale 205, 206, 207 oder alternativ durch eine fallende Flanke, von dem zweiten auf den ersten Wert, eines der Signale 205, 206, 207 definiert sein. Alternativ kann ein Sektorwechsel an Rotorpositionen erfolgen, die nicht mit einem Flankenwechsel zusammenfallen.

Eine Drehzahl des Rotors 102 kann durch eine Auswertung eines zeitlichen Abstands zumindest zweier aufeinanderfolgender Flankenwechsel der Signale 205, 206, 207 bestimmt werden.

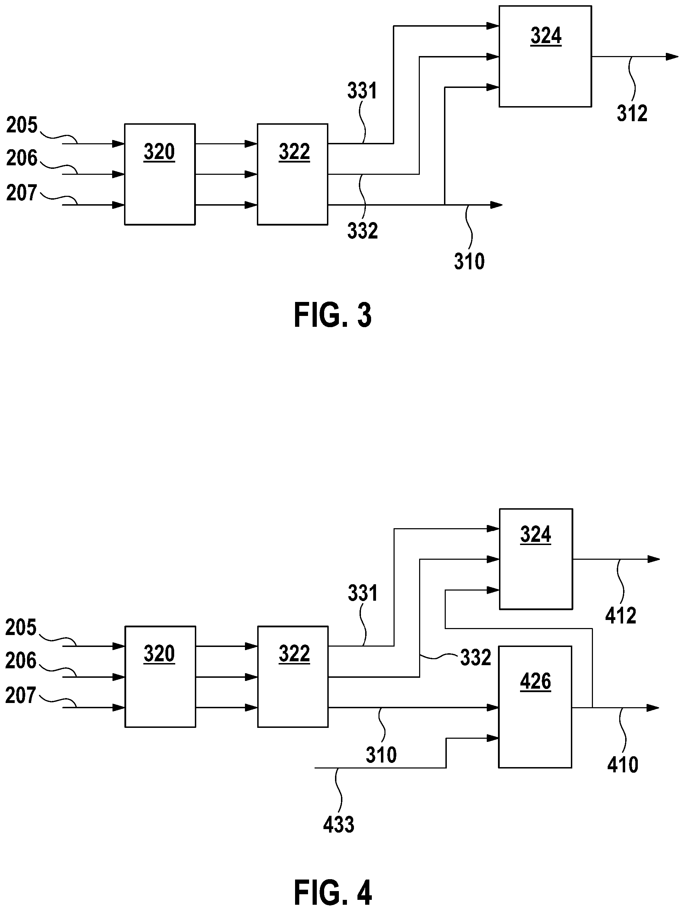

Fig. 3 zeigt ein Blockschaltbild einer Vorrichtung zur Bestimmung einer Drehzahl 310 und einer Rotorposition 312 einer Drehfeldmaschine basierend auf Hallsensorsignalen 205, 206, 207. Bei der Drehfeldmaschine kann es sich um die anhand von Fig. 1 beschriebene Drehfeldmaschine handeln. Bei den Hallsensorsignalen 205, 206, 207 kann es sich um die anhand von Fig. 2 beschriebenen Hallsensorsignale handeln. Die Vorrichtung weist eine Plausibilisierungseinrichtung 320, eine Ermittlungseinrichtung 322 und eine Winkelnachbildungseinrichtung 324 auf.

Die Plausibilisierungseinrichtung 320 ist ausgebildet, um die Hallsensorsignalen 205, 206, 207 zu empfangen, zu plausibilisieren und als plausibilisierte Hallsensorsignale an die Ermittlungseinrichtung 322 auszugeben.

Die Ermittlungseinrichtung 322 ist ausgebildet, um die plausibilisierte Hallsensorsignale zu empfangen und basierend auf den plausibilisierten Hallsensorsignalen einen Sektor 331 in dem sich der Rotor der Drehfeldmaschine befindet, eine Richtung 332 in der sich der Rotor bewegt und die Drehzahl 310 des Rotors zu bestimmen und auszugeben. Der Sektor 331, die Richtung 332 und die Drehzahl 310 können als elektrische Signale oder als eine Sektorinformation, eine Richtungsinformation und eine Drehzahlinformation ausgegeben werden. Die Vorrichtung ist ausgebildet, um die Drehzahl 310 als Ausgangssignal auszugeben.

Die Winkelnachbildungseinrichtung 324 ist ausgebildet, um den Sektor 331, die Richtung 332 und die Drehzahl 310 von der Ermittlungseinrichtung 322 zu empfangen und basierend daraus die Rotorposition 312 zu bestimmen und auszugeben. Die Vorrichtung ist ausgebildet, um die Rotorposition 312 als Ausgangssignal auszugeben.

Zur Berechnung der Rotorposition und der Drehzahl wird somit zunächst eine Plausibilisierung der Hall-Signale 205, 206, 207 durchgeführt. Anschließend erfolgt die Berechnung der Drehzahl 310 direkt aus der zeitlichen Differenz der einzelnen plausibilisierten Signale 205, 206, 207. Auch der Sektor 331 und die Richtung 332 werden direkt aus den plausibilisierten Hall-Signalen berechnet. Die Rotorposition 312 wird dann direkt aus der Drehzahl 310 mittels Integration ermittelt. Der Sektor 331 dient zur Initialisierung der Integration.

Fig. 4 zeigt ein Blockschaltbild einer Vorrichtung zur Bestimmung einer Drehzahl 410 und einer Rotorposition 412 einer Drehfeldmaschine basierend auf Hallsensorsignalen 205, 206, 207, gemäß einem Ausführungsbeispiel der vorliegenden Erfindung. Bei der Drehfeldmaschine kann es sich um die anhand von Fig. 1 beschriebene Drehfeldmaschine handeln. Bei den Hallsensorsignalen 205, 206, 207 kann es sich um die anhand von Fig. 2 beschriebenen Hallsensorsignale handeln. Die Vorrichtung weist eine Plausibilisierungseinrichtung 320, eine Ermittlungseinrichtung 322, eine Winkelnachbildungseinrichtung 324 und einen Drehzahlbeobachter 426 auf.

Die Plausibilisierungseinrichtung 320 ist ausgebildet, um die Hallsensorsignalen 205, 206, 207 zu empfangen, zu plausibilisieren und als plausibilisierte Hallsensorsignale an die Ermittlungseinrichtung 322 auszugeben.

Die Ermittlungseinrichtung 322 ist ausgebildet, um die plausibilisierte Hallsensorsignale zu empfangen und basierend auf den plausibilisierten Hallsensorsignalen einen Sektor 331 in dem sich der Rotor der Drehfeldmaschine befindet, eine Richtung 332 in der sich der Rotor bewegt und die Drehzahl 310 des Rotors zu bestimmen und auszugeben.

Die Winkelnachbildungseinrichtung 324 ist ausgebildet, um den Sektor 331 und die Richtung 332 von der Ermittlungseinrichtung 322 und eine beobachtete Drehzahl von dem Drehzahlbeobachter 426 zu empfangen und basierend daraus die Rotorposition 412 zu bestimmen und auszugeben. Die Rotorposition 412 wird somit unter Verwendung eines Beobachters bestimmt. Die Vorrichtung ist ausgebildet, um die Rotorposition 412 als Ausgangssignal auszugeben.

Der Drehzahlbeobachter 426 ist ausgebildet, um die Drehzahl 310 von der der Ermittlungseinrichtung 322 und eine Information über einen Strom 433 in q-Richtung zu empfangen und basierend daraus die beobachtete Drehzahl 410 zu ermitteln. Der Strom 433 in q-Richtung entspricht dem durch Wicklungen der Drehfeldmaschine fließenden Strom, durch den ein Magnetfeld generiert wird, dass ein Drehmoment des Rotors 102 bewirkt. Ein Wert des Stroms 433 kann entweder mittels einer geeigneten Messeinrichtung gemessen werden oder von einer Steuereinrichtung zur Einstellung des Stroms 433 bereitgestellt werden. Die beobachtete Drehzahl 410 wird an die Winkelnachbildungseinrichtung 324 bereitgestellt. Ferner ist die Vorrichtung ausgebildet, um die beobachtete Drehzahl 410 als Ausgangssignal auszugeben.

Gemäß einem Ausführungsbeispiel lässt sich mittels des anhand von Fig. 4 gezeigten Ansatzes eine Methode zur störsicheren Berechnung der Drehzahl 410 und der Rotorposition 412 realisieren.

Dabei wird die Drehzahl 310 zunächst unmittelbar aus den eintreffenden Hall-Signalen 205, 206, 207 durch eine direkte Differentiation berechnet. Hierbei kann zunächst eine Plausibilisierung der eintreffenden Hallsignale erfolgen. Die Qualität des Drehzahlsignals 310 wird anschließend sehr störsicher durch den Drehzahlbeobachter 426 wesentlich verbessert. Diese beobachtete Drehzahl 410 wird zur Regelung verwendet. Die Rotorposition wird nicht mehr unmittelbar aus der störbehafteten direkt ermittelten Drehzahl 310 berechnet sondern aus der durch den Drehzahlbeobachter 426 berechneten beobachteten Drehzahl 410.

Im Folgenden werden die gemäß dieser Methode durchzuführenden Schritte gemäß einem Ausführungsbeispiel detailliert beschrieben.

Zunächst wird eine Plausibilisierung 320 durchgeführt. Die Plausibilisierung 320 umfasst ein Einlesen der Hall-Signale 205, 206, 207 und eine Entprellung der Signale 205, 206, 207.

Mithilfe der Ermittlungseinrichtung 322 wird der Sektor 331, die Richtung 332 und die Drehzahl 310 bestimmt. Zunächst erfolgt in der Ermittlungseinrichtung 322 eine Bestimmung des aktuellen Sektors 331 in dem sich der Rotor der Drehfeldmaschine befindet aus der logischen Abfolge der Hall-Signale 205, 206, 207. Ferner erfolgt eine Bestimmung der aktuellen Drehrichtung 332 des Rotors aus der logischen Abfolge der Hall-Signale 205, 206, 207 und eine Berechnung der aktuellen Drehzahl 310 aus der zeitlichen Differenz zwischen zwei Hall-Signalflanken der Hall-Signale 205, 206, 207. Eine Plausibilisierung der Drehzahl 310 wird in Abhängigkeit der zuletzt ermittelten Drehzahl durchgeführt.

Zur Winkelnachbildung 324 erfolgt eine Berechnung der aktuellen Rotorposition 412 durch Integration der beobachteten Drehzahl 410. Dabei erfolgt eine Initialisierung des Integrierers bei jeder Änderung des Sektors 331 durch den Anfangswert des aktuellen Sektors 331. Ferner erfolgt eine Korrektur der Rotorposition 412 aufgrund der Anordnung der Hallsensoren in Bezug auf die initiale Rotorlage der Drehfeldmaschine.

Der Drehzahlbeobachter 426 ist ein vollständiger Zustandsbeobachter ohne bleibende Abweichung für die Drehzahl 410 der Drehfeldmaschine. Als Eingangssignale dienen die bereits durch Differentiation ermittelte Drehzahl 310 sowie der Statorstrom 433 in q-Richtung im feldorientierten Koordinatensystem. Am Ausgang steht ein beobachtetes Drehzahlsignal 410 für die weitere Verwendung im Drehzahlregelsystem zur Verfügung. Eine stabile Dimensionierung des Beobachters 426 erfolgt durch eine direkte Polvorgabe.

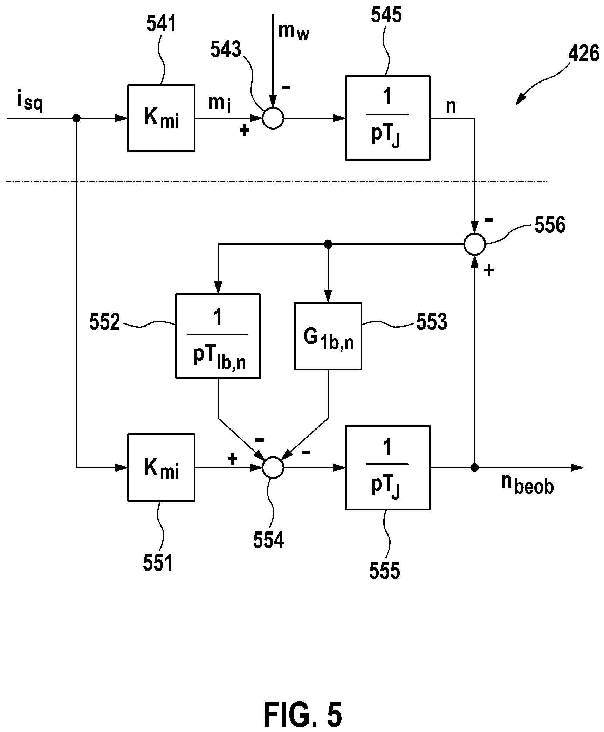

Fig. 5 zeigt einen Drehzahlbeobachter 426 gemäß einem Ausführungsbeispiel der vorliegenden Erfindung. Bei dem Drehzahlbeobachter 426 handelt es sich um einen vollständigen Zustandbeobachter zur Drehzahlermittlung eines E-Motors, beispielsweise der anhand von Fig. 1 beschriebenen Drehfeldmaschine. Der Drehzahlbeobachter 426 kann bei dem anhand von Fig. 4 beschriebenen Ausführungsbeispiel eingesetzt werden.

Der Drehzahlbeobachter 426 ist ausgebildet, um basierend auf einem Eingangswert $i_{sq}$ und einem zugeführten Wert $m_w$ einen der beobachteten Drehzahl entsprechenden Wert $n_{beob}$ als Ausgangsgröße auszugeben. Der Drehzahlbeobachter 426 umfasst ein Regelstreckenmodell und einen parallelgeschalteten Beobachter.

Das Regelstreckenmodell umfasst Einheiten 541, 543, 545. Die Einheit 541 ist ausgebildet, um einen Eingangswert $i_{sq}$ des Drehzahlbeobachters 426 zu empfangen und daraus mittels einer Funktion $K_{mi}$ einen Wert $m_i$ zu bestimmen. Die Einheit 543 ist ausgebildet, um den Wert $m_i$ um einen der Regelstrecke zugeführten Wert $m_w$ zu verringern und an die Einheit 545 auszugeben. Somit kann die Einheit 543 als Subtrahierer ausgeführt sein. Die Einheit 545 ist ausgebildet, um durch Ausführen einer Funktion $1/pT_J$ den von der Einheit 543 empfangenen Wert in einen Wert $n$ umzuwandeln und an die Einheit 556 des Beobachters auszugeben.

Der Beobachter umfasst Einheiten 551, 552, 553, 554, 555, 556. Die Einheit 551 ist ausgebildet, um den Eingangswert $i_{sq}$ des Drehzahlbeobachters 426 zu empfangen und daraus mittels der Funktion $K_{mi}$ einen Wert zu bestimmen und an die Einheit 554 auszugeben. Die Einheit 552 ist ausgebildet, um einen Ausgangswert der Einheit 556 zu empfangen und daraus mittels einer Funktion $1/pT_{lb,n}$ einen Wert zu bestimmen und an die Einheit 554 auszugeben. Die Einheit 553 ist ausgebildet, um einen Ausgangswert der Einheit 556 zu empfangen und daraus mittels einer Funktion $G_{1b,n}$ einen Wert zu bestimmen und an die Einheit 554 auszugeben. Die Einheit 554 ist ausgebildet, um Ausgangswerte der Einheiten 552, 553 zu empfangen und von einem Ausgangswert der Einheit 551 zu subtrahieren. Die Einheit 555 ist ausgebildet, um durch Ausführen der Funktion $1/pT_J$ den von der Einheit 554 empfangenen Wert in einen Wert $n_{beob}$ umzuwandeln und an die Einheit 556 des Beobachters auszugeben. Die Einheit 556 ist ausgebildet, um den Wert $n$ von dem Wert $n_{beob}$ zu subtrahieren und den daraus resultierenden Wert an die Einheiten 552, 553 auszugeben.

Der Drehzahlbeobachter 426 ist ausgebildet, um den Wert $n_{beob}$ als Ausgangsgröße auszugeben.

Im Folgenden werden die für den Drehzahlbeobachter 426 verwendeten Parameter erläutert:

$i_{sq}$: Strom in q-Richtung des E-Motors

$K_{mi}$: Normierte Drehmomentkonstante des E-Motors

$m_i$: "Inneres" Drehmoment des E-Motors

$m_w$: An der Welle des E-Motors angreifendes Widerstandsmoment

$1/pT_J$: Integrierer, welcher die mechanische Teilregelstrecke zwischen der Differenz des inneren Drehmoments und dem Widerstandsmoment einerseits und der Drehzahl andererseits vollständig beschreibt.

$n$: Aktuelle Drehzahl des Rotors des E-Motors

$1/pT_{lb,n}$: Beobachterintegrierer, welcher die mechanische Teilregelstrecke zwischen der Differenz des inneren Drehmoments und dem Widerstandsmoment einerseits und der Drehzahl andererseits vollständig nachbildet.

$G_{1b,n}$: Proportionalitätsfaktor des Beobachters

$n_{beob}$: Beobachtete Drehzahl des Rotors des E-Motors

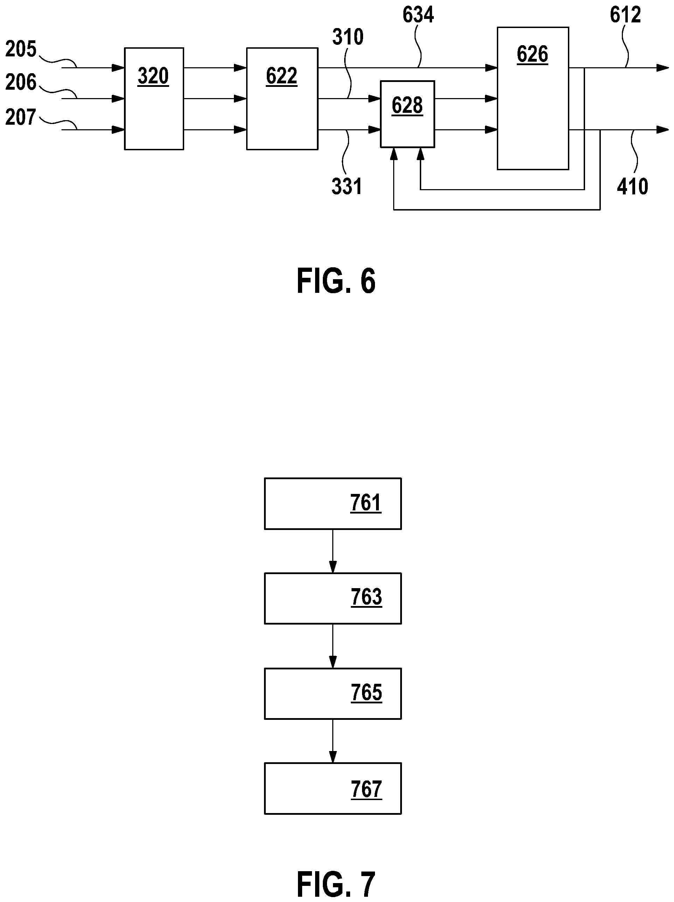

Fig. 6 zeigt ein Blockschaltbild einer Vorrichtung zur Bestimmung einer Drehzahl 410 und einer Rotorposition 612 einer Drehfeldmaschine basierend auf Hallsensorsignalen 205, 206, 207 gemäß einem Ausführungsbeispiel der vorliegenden Erfindung. Bei der Drehfeldmaschine kann es sich um die anhand von Fig. 1 beschriebene Drehfeldmaschine handeln. Bei den Hallsensorsignalen 205, 206, 207 kann es sich um die anhand von Fig. 2 beschriebenen Hallsensorsignale handeln. Die Vorrichtung weist eine Plausibilisierungseinrichtung 320, eine Ermittlungseinrichtung 622, einen vollständigen Beobachter 626 und einen Speicher 628 auf.

Die Plausibilisierungseinrichtung 320 ist ausgebildet, um die Hallsensorsignalen 205, 206, 207 zu empfangen, zu plausibilisieren und als plausibilisierte Hallsensorsignale an die Ermittlungseinrichtung 322 auszugeben.

Die Ermittlungseinrichtung 622 zur Ermittlung einer Beschleunigung, einer Drehzahl und eines Sektors ist ausgebildet, um die plausibilisierten Hallsensorsignale zu empfangen und basierend auf den plausibilisierten Hallsensorsignalen einen Sektor 331 in dem sich der Rotor der Drehfeldmaschine befindet, eine Drehzahl 310 des Rotors und eine Beschleunigung 634 des Rotors zu bestimmen und auszugeben.

Der Speicher ist ausgebildet, um die Drehzahl 310 und den Sektor 331 von der Ermittlungseinrichtung 622 und eine beobachtete Drehzahl 410 und eine beobachtete Rotorposition 612 von dem vollständigen Beobachter 626 zu empfangen und entweder die Drehzahl 310 und den Sektor 331 oder die beobachtete Drehzahl 410 und die beobachtete Rotorposition 612 an den vollständigen Beobachter 626 auszugeben.

Der vollständige Beobachter 626 ist ausgebildet, um die Beschleunigung 634 von der Ermittlungseinrichtung 622 und die Drehzahl 310 und den Sektor 331 oder die beobachtete Drehzahl 410 und die beobachtete Rotorposition 612 von dem Speicher 628 zu empfangen und basierend daraus die beobachtete Rotorposition 612 und die beobachtete Drehzahl 410 zu bestimmen und auszugeben. Die Vorrichtung ist ausgebildet, um die beobachtete Rotorposition 612 und die beobachtete Drehzahl 410 als Ausgangssignale auszugeben.

Gemäß einem Ausführungsbeispiel lässt sich mittels des anhand von Fig. 6 gezeigten Ansatzes eine Methode zur störsicheren Berechnung der Drehzahl 410 und der Rotorposition 612 realisieren.

Dabei werden die Drehzahl 310 und die Beschleunigung 634 zunächst unmittelbar aus den eintreffenden Hall-Signalen 205, 206, 207 durch eine einfache, bzw. zweifache direkte Differentiation berechnet. Hierbei kann zunächst eine Plausibilisierung der eintreffenden Hallsignale 205, 206, 207 erfolgen. Mithilfe des vollständigen Zustandsbeobachters 626 der mechanischen Regelstrecke der Drehfeldmaschine wird ausgehend von der berechneten Beschleunigung 634 und Drehzahl 310 sowie des aktuellen Sektors 331 sowohl die Rotorposition 612 als auch die Drehzahl 410 der Maschine beobachtet. Zur Stabilisierung und Synchronisation des Beobachters 626 werden die beobachten Ausgangsgrößen 612, 410 zwischen zwei Hall-Flanken der Hall-Signale 205, 206, 207 als Eingangsgrößen zurückgeführt.

Im Folgenden werden die gemäß dieser Methode durchzuführenden Schritte gemäß einem Ausführungsbeispiel detailliert beschrieben.

Zunächst wird eine Plausibilisierung 320 durchgeführt. Die Plausibilisierung 320 umfasst ein Einlesen der Hall-Signale 205, 206, 207 und eine Entprellung der Signale 205, 206, 207.

Zur Ermittlung 622 des Sektors, der Drehzahl und der Beschleunigung erfolgt eine Bestimmung des aktuellen Sektors 331 in dem sich der Rotor der Drehfeldmaschine befindet aus der logischen Abfolge der Hall-Signale 205, 206, 207. Ferner erfolgt eine Berechnung der aktuellen Drehzahl 310 einschließlich der aktuellen Drehrichtung aus der zeitlichen Differenz zwischen zwei Hall-Signalflanken der Hall-Signale 205, 206, 207. Eine Plausibilisierung der Drehzahl 310 wird in Abhängigkeit der zuletzt ermittelten Drehzahl durchgeführt. Eine Berechnung der aktuellen Beschleunigung erfolgt aus der Drehzahländerung. Eine Plausibilisierung der Beschleunigung wird in Abhängigkeit der zuletzt ermittelten Beschleunigung durchgeführt.

In Bezug auf die Speicherung 628 werden bei jeder Sektoränderung dem vollständigen Beobachter 626 neue Werte des aktuell ermittelten Sektors 331 und der Drehzahl 310 zugeführt. Findet keine Sektoränderung statt, wird die beobachtete Drehzahl 410 und Rotorposition 612 zurückgeführt.

Der vollständige Beobachter 626 ist als vollständiger Luenberger Beobachter realisiert. Als Eingangssignale empfängt der vollständige Beobachter 626 die Beschleunigung $\ddot{\theta}$, die Drehzahl $\dot{\theta}$ und die Rotorposition $\theta$, entsprechend der Signale 634, 310, 628, 612, 410.

Daraus ergibt sich ein Eingangsvektor

$$ U = \begin{bmatrix} \ddot{\theta} \\ \dot{\theta} \\ \theta \end{bmatrix} . $$

Als Ausgangsignale stellt der vollständige Beobachter 626 die beobachtete Drehzahl $\hat{\dot{\theta}}$ und die beobachtete Rotorposition $\hat{\theta}$ bereit.

Daraus ergibt sich ein Ausgangs- und Zustandsvektor

$$ \hat{Y} = \hat{X} = \begin{bmatrix} \hat{\dot{\theta}} \\ \hat{\theta} \end{bmatrix} $$

Das Zustandssystem des vollständigen Beobachters 626 lässt sich wie folgt beschreiben:

$$ \frac{d\hat{X}}{dt} = A \cdot \hat{X} + B \cdot U $$

$$ \hat{Y} = I_2 \cdot \hat{X} $$

Als Beobachter 626 wird somit ein vollständiger Luenberger-Beobachter für den mechanischen Teil der Drehfeldmaschine ausgehend von der Beschleunigung bis zur Rotorposition eingesetzt. Am Ausgang des Beobachters 626 stehen das beobachtete Drehzahlsignal 410 und das beobachtete Rotorpositionssignal 612 für die weitere Verwendung im Drehzahlregelsystem zur Verfügung. Eine stabile Dimensionierung des Beobachters 626 erfolgt durch eine direkte Polvorgabe.

Fig. 7 zeigt ein Ablaufdiagramm eines Verfahrens zur Bestimmung der Rotorposition und der Drehzahl einer Drehfeldmaschine gemäß einem Ausführungsbeispiel der vorliegenden Erfindung. Bei der Drehfeldmaschine kann es sich um die anhand von Fig. 1 beschriebene Drehfeldmaschine handeln. In einem Schritt 761 werden fortlaufend Hallsensorsignale, beispielsweise die anhand von Fig. 2 beschriebenen Signale, empfangen. In einem Schritt 763 wird basierend auf den Hallsensorsignalen eine Information über den Sektor ermittelt. Die Information über den Sektor kann einen Winkelbereich definieren, in dem sich ein Bezugspunkt des Rotors der Drehfeldmaschine bei Erfassung der Hallsensorsignale befunden hat oder befindet. In einem Schritt 765 wird basierend auf den Hallsensorsignalen eine Information über eine vorläufige Drehzahl ermittelt. Die Information über die vorläufige Drehzahl kann einer aus den aktuellen und vorangegangenen Hallsensorsignalen ermittelten Drehzahl des Rotors entsprechen. In einem Schritt 767 werden unter Einsatz eines Beobachters die Rotorposition und die Drehzahl der Drehfeldmaschine basierend auf der Information über den Sektor und der Information über die vorläufige Drehzahl bestimmt.

Gemäß einem Ausführungsbeispiel werden zur Positionserfassung des Rotors Hall-Sensoren verwendet. Die Die Hall-Signale der Sensoren werden plausibilisiert. Die Drehzahl des Rotors wird auf "herkömmliche" weise relativ störbehaftet durch eine Differentiation berechnet. Das so berechnete Drehzahlsignal wird durch einen Drehzahlbeobachter wesentlich verbessert. Eine Alternative stellt die direkte Berechnung der Beschleunigung mit anschließender Verbesserung durch Beobachter dar. Somit wird ein Beobachter zur Verbesserung der Hall-Signale eingesetzt. Auch kann ein vorhandenes Drehzahlsignal mittels eines Beobachters verbessert werden.

Die beschriebenen und in den Figuren gezeigten Ausführungsbeispiele sind nur beispielhaft gewählt. Die Erfindung ist in den nachfolgenden Ansprüchen definiert.

**Patentansprüche**

1.  Verfahren zur Bestimmung der Rotorposition und der Drehzahl einer Drehfeldmaschine, das die folgenden Schritte umfasst:

    Ermitteln (763) eines Sektors (331) in dem sich ein Rotor (102) der Drehfeldmaschine befindet, basierend auf Hallsensorsignalen (205, 206, 207), wobei die Hallsensorsignale von im Bereich des Rotors angeordneten Hallsensoren (105, 106, 107) ausgegebene Signale repräsentieren;
    Ermitteln (765) einer vorläufigen Drehzahl (310) der Drehfeldmaschine, basierend auf den Hallsensorsignalen;
    Ermitteln einer Drehrichtung (332) des Rotors (102) basierend auf den Hallsensorsignalen (205, 206, 207); und
    Bestimmen (767) der Rotorposition (412) und der Drehzahl (410) basierend auf dem Sektor und der vorläufigen Drehzahl, wobei zumindest zum Bestimmen der Drehzahl ein Beobachter (426) der Drehfeldmaschine eingesetzt wird, wobei der Beobachter (426) ausgebildet ist, um die vorläufige Drehzahl (310) und eine Information über den ein Drehmoment des Rotors bewirkenden Strom (433) der Drehfeldmaschine zu empfangen und basierend daraus die beobachtete Drehzahl (410) zu ermitteln, wobei die Rotorposition (412) basierend auf dem Sektor (331), der Drehrichtung (332) und der Drehzahl (410) bestimmt wird.

2.  Verfahren gemäß Anspruch 1, bei dem im Schritt des Bestimmens (767) die Rotorposition (412) basierend auf einer Aufsummierung der Drehzahl (410) bestimmt wird.

3.  Verfahren zur Bestimmung der Rotorposition und der Drehzahl einer Drehfeldmaschine, das die folgenden Schritte umfasst:

    Ermitteln (763) eines Sektors (331) in dem sich ein Rotor (102) der Drehfeldmaschine befindet, basierend auf Hallsensorsignalen (205, 206, 207), wobei die Hallsensorsignale von im Bereich des Rotors angeordneten Hallsensoren (105, 106, 107) ausgegebene Signale repräsentieren;
    Ermitteln (765) einer vorläufigen Drehzahl (310) der Drehfeldmaschine, basierend auf den Hallsensorsignalen; und
    Bestimmen (767) der Rotorposition (612) und der Drehzahl (410) basierend auf dem Sektor und der vorläufigen Drehzahl, wobei zumindest zum Bestimmen der Drehzahl ein Beobachter (626) der Drehfeldmaschine eingesetzt wird, mit einem Schritt des Ermittelns einer Beschleunigung (634) des Rotors (102) basierend auf den Hallsensorsignalen (205, 206, 207) und bei dem im Schritt des Bestimmens (767) die Rotorposition (612) und die Drehzahl (410) unter Einsatz des Beobachters (626) basierend auf dem Sektor (331), der vorläufigen Drehzahl (310) und der Beschleunigung (634) bestimmt werden, wobei der Beobachter (626) dazu ausgebildet ist, die Beschleunigung (634), die vorläufige Drehzahl (310) und den Sektor (331) zu empfangen und die Rotorposition (612) und die Drehzahl (410) auszugeben.

4.  Verfahren gemäß Anspruch 3, bei dem im Schritt des Bestimmens (767) die Rotorposition (612) und die Drehzahl (410) bei einem Wechsel des Sektors (331) basierend auf dem Sektor (331) und der vorläufigen Drehzahl (310) und sonst basierend auf einer unter Einsatz des Beobachters (626) bestimmten und rückgeführten Rotorposition (612) und einer unter Einsatz des Beobachters bestimmten und rückgeführten Drehzahl (410) bestimmt werden.

5.  Verfahren gemäß einem der vorangegangenen Ansprüche, mit einem Schritt des Empfangens und Plausibilisierens (320; 761) der Hallsensorsignale (205, 206, 207).

6.  Verfahren gemäß einem der vorangegangenen Ansprüche, bei dem im Schritt des Ermittelns (763) des Sektors der Sektor (331) basierend auf einer zeitlichen Abfolge der Hallsensorsignale (205, 206, 207) und im Schritt des Ermittelns (765) der vorläufigen Drehzahl (310), die vorläufige Drehzahl aus einer zeitlichen Differenz zwischen aufeinanderfolgender Flanken der Hallsensorsignale ermittelt wird.

7.  Vorrichtung zur Bestimmung der Rotorposition (412) und der Drehzahl (410) einer Drehfeldmaschine, wobei die Vorrichtung die folgenden Merkmale aufweist:

    eine Einrichtung zum Ermitteln (763) eines Sektors (331) in dem sich ein Rotor (102) der Drehfeldmaschine befindet, basierend auf Hallsensorsignalen (205, 206, 207), wobei die Hallsensorsignale von im Bereich des Rotors angeordneten Hallsensoren (105, 106, 107) ausgegebene Signale repräsentieren;

eine Einrichtung zum Ermitteln (765) einer vorläufigen Drehzahl (310) der Drehfeldmaschine, basierend auf den Hallsensorsignalen;

eine Einrichtung zum Ermitteln einer Drehrichtung (332) des Rotors (102) basierend auf den Hallsensorsignalen (205, 206, 207); und

eine Einrichtung zum Bestimmen (767) der Rotorposition (412) und der Drehzahl (410) basierend auf dem Sektor und der vorläufigen Drehzahl, wobei die Einrichtung zum Bestimmen der Rotorposition (412) und der Drehzahl (410) einen Beobachter (426) aufweist, der zumindest zum Bestimmen der Drehzahl so ausgebildet ist, dass er mittels der vorläufigen Drehzahl (310) und eines ein Drehmoment des Rotors bewirkenden Stroms (433) der Drehfeldmaschine die Drehzahl bestimmt, und wobei die Rotorposition (412) basierend auf dem Sektor (331), der Drehrichtung (332) und der Drehzahl (410) bestimmt wird.

8. Vorrichtung zur Bestimmung der Rotorposition (612) und der Drehzahl (410) einer Drehfeldmaschine, wobei die Vorrichtung die folgenden Merkmale aufweist:

eine Einrichtung zum Ermitteln (763) eines Sektors (331) in dem sich ein Rotor (102) der Drehfeldmaschine befindet, basierend auf Hallsensorsignalen (205, 206, 207), wobei die Hallsensorsignale von im Bereich des Rotors angeordneten Hallsensoren (105, 106, 107) ausgegebene Signale repräsentieren;

eine Einrichtung zum Ermitteln (765) einer vorläufigen Drehzahl (310) der Drehfeldmaschine, basierend auf den Hallsensorsignalen;

eine Einrichtung zum Ermitteln einer Drehrichtung (332) des Rotors (102) basierend auf den Hallsensorsignalen (205, 206, 207); und

eine Einrichtung zum Bestimmen (767) der Rotorposition (612) und der Drehzahl (410) basierend auf dem Sektor und der vorläufigen Drehzahl, wobei zumindest zum Bestimmen der Drehzahl ein Beobachter (426; 626) der Drehfeldmaschine eingesetzt und die Drehzahl (410) unter Einsatz des Beobachters (426) basierend auf der vorläufigen Drehzahl (310) bestimmt wird;

eine Einrichtung zum Ermitteln einer Beschleunigung (634) des Rotors (102) basierend auf den Hallsensorsignalen (205, 206, 207);

wobei der Beobachter (626) dazu ausgebildet ist, die Beschleunigung (634), die vorläufige Drehzahl (310) und den Sektor (331) zu empfangen und die Rotorposition (612) und die Drehzahl (410) auszugeben.

9. Drehfeldmaschine, mit folgenden Merkmalen:

einem Rotor (102);

einem Stator (104) mit zumindest drei Hallsensoren (105, 106, 107), wobei jeder der Hallsensoren ausgebildet ist, um eine Richtung eines Magnetfelds des Rotors zu erfassen und abhängig von der Richtung ein Hallsensorsignal (205, 206, 207) auszugeben; und

einer Vorrichtung gemäß Anspruch 7 oder 8 zur Bestimmung der Rotorposition und der Drehzahl einer Drehfeldmaschine basierend auf den von den zumindest drei Hallsensoren ausgegebenen Hallsensorsignalen.

10. Computer-Programmprodukt mit Programmcode zur Durchführung des Verfahrens nach einem der Ansprüche 1 bis 6, wenn das Programm auf einer Vorrichtung nach einem der Ansprüche 7 oder 8 ausgeführt wird.

## Claims

1. Method for determining the rotor position and the rotation speed of a three-phase machine, which method comprises the following steps:

ascertaining (763) a sector (331) in which a rotor (102) of the three-phase machine is located based on Hall sensor signals (205, 206, 207), wherein the Hall sensor signals represent signals which are output by Hall sensors (105, 106, 107) which are arranged in the region of the rotor;

ascertaining (765) a provisional rotation speed (310) of the three-phase machine based on the Hall sensor signals; ascertaining a rotation direction (332) of the rotor (102) based on the Hall sensor signals (205, 206, 207); and

determining (767) the rotor position (412) and the rotation speed (410) based on the sector and the provisional rotation speed, wherein an observer (426) of the three-phase machine is used at least for determining the rotation speed, wherein the observer (426) is designed in order to receive the provisional rotation speed (310) and an item of information about the current (433), which produces a torque of the rotor, of the three-phase machine and to ascertain the observed rotation speed (410) based thereon, wherein the rotor position (412) is determined based on the sector (331), the rotation direction (332) and the rotation speed (410).

2. Method according to Claim 1, in which, in the determining step (767), the rotor position (412) is determined based on a summation of the rotation speed (410) .

3. Method for determining the rotor position and the rotation speed of a three-phase machine, which method comprises the following steps:

> ascertaining (763) a sector (331) in which a rotor (102) of the three-phase machine is located based on Hall sensor signals (205, 206, 207), wherein the Hall sensor signals represent signals which are output by Hall sensors (105, 106, 107) which are arranged in the region of the rotor;
> ascertaining (765) a provisional rotation speed (310) of the three-phase machine based on the Hall sensor signals; and
> determining (767) the rotor position (612) and the rotation speed (410) based on the sector and the provisional rotation speed, wherein an observer (626) of the three-phase machine is used at least for determining the rotation speed, comprising a step of ascertaining an acceleration (634) of the rotor (102) based on the Hall sensor signals (205, 206, 207), and in which method, in the determining step (767), the rotor position (612) and the rotation speed (410) are determined using the observer (626) based on the sector (331), the provisional rotation speed (310) and the acceleration (634), wherein the observer (626) is designed to receive the acceleration (634), the provisional rotation speed (310) and the sector (331) and to output the rotor position (612) and the rotation speed (410) .

4. Method according to Claim 3, in which, in the determining step (767), the rotor position (612) and the rotation speed (410) are determined, when there is a change in the sector (331), based on the sector (331) and the provisional rotation speed (310) and otherwise based on a rotor position (612) which is determined and fed back using the observer (626) and a rotation speed (410) which is determined and fed back using the observer.

5. Method according to one of the preceding claims, comprising a step of receiving and checking the plausibility (320; 761) of the Hall sensor signals (205, 206, 207).

6. Method according to one of the preceding claims, in which, in the step of ascertaining (763) the sector, the sector (331) is ascertained based on a time sequence of the Hall sensor signals (205, 206, 207) and, in the step of ascertaining (765) the provisional rotation speed (310), the provisional rotation speed is ascertained from a time difference between successive edges of the Hall sensor signals.

7. Apparatus for determining the rotor position (412) and the rotation speed (410) of a three-phase machine, wherein the apparatus has the following features:

> a device for ascertaining (763) a sector (331) in which a rotor (102) of the three-phase machine is located based on Hall sensor signals (205, 206, 207), wherein the Hall sensor signals represent signals which are output by Hall sensors (105, 106, 107) which are arranged in the region of the rotor;
> a device for ascertaining (765) a provisional rotation speed (310) of the three-phase machine based on the Hall sensor signals;
> a device for ascertaining a rotation direction (332) of the rotor (102) based on the Hall sensor signals (205, 206, 207); and
> a device for determining (767) the rotor position (412) and the rotation speed (410) based on the sector and the provisional rotation speed, wherein the device for determining the rotor position (412) and the rotation speed (410) has an observer (426) which, at least for determining the rotation speed, is designed such that it determines the rotation speed by means of the provisional rotation speed (310) and a current (433), which produces a torque of the rotor, of the three-phase machine, and wherein the rotor position (412) is determined based on the sector (331), the rotation direction (332) and the rotation speed (410).

8. Apparatus for determining the rotor position (612) and the rotation speed (410) of a three-phase machine, wherein the apparatus has the following features:

> a device for ascertaining (763) a sector (331) in which a rotor (102) of the three-phase machine is located based on Hall sensor signals (205, 206, 207), wherein the Hall sensor signals represent signals which are output by Hall sensors (105, 106, 107) which are arranged in the region of the rotor;
> a device for ascertaining (765) a provisional rotation speed (310) of the three-phase machine based on the Hall sensor signals;
> a device for ascertaining a rotation direction (332) of the rotor (102) based on the Hall sensor signals (205, 206, 207); and
> a device for determining (767) the rotor position (612) and the rotation speed (410) based on the sector and the provisional rotation speed, wherein an observer (426; 626) of the three-phase machine is used at least for determining the rotation speed and the rotation speed (410) is determined using the observer (426) based on the provisional rotation speed (310); a device for ascertaining an acceleration (634) of the rotor (102) based on the Hall sensor signals (205, 206, 207) ; wherein the observer (626) is designed to receive the acceleration (634), the provisional rotation speed (310) and the sector (331) and to output the rotor position (612) and the rotation speed (410).

9. Three-phase machine, having the following features:

a rotor (102); a stator (104) having at least three Hall sensors (105, 106, 107), wherein each of the Hall sensors is designed to detect a direction of a magnetic field of the rotor and to output a Hall sensor signal (205, 206, 207) depending on the direction; and an apparatus according to Claim 7 or 8 for determining the rotor position and the rotation speed of a three-phase machine based on the Hall sensor signals which are output by the at least three Hall sensors.

10. Computer program product with program code for carrying out the method according to one of Claims 1 to 6 when the program is run on an apparatus according to either of Claims 7 and 8.

**Revendications**

1. Procédé pour la détermination de la position du rotor et de la vitesse de rotation d'une machine à champ tournant, comprenant les étapes consistant à :

déterminer (763) un secteur (331) dans lequel se trouve un rotor (102) de la machine à champ tournant sur la base de signaux de capteurs Hall (205, 206, 207), dans lequel les signaux de capteurs Hall représentent des signaux délivrés par des capteurs Hall (105, 106, 107) disposés dans la zone du rotor ; déterminer (765) une vitesse de rotation provisoire (310) de la machine à champ tournant sur la base des signaux de capteurs Hall ; déterminer un sens de rotation (332) du rotor (102) sur la base des signaux de capteurs Hall (205, 206, 207) ; et déterminer (767) la position du rotor (412) et la vitesse de rotation (410) sur la base du secteur et de la vitesse de rotation provisoire, dans lequel, au moins pour la détermination de la vitesse de rotation, un observateur (426) de la machine à champ tournant est utilisé, dans lequel l'observateur (426) est apte à recevoir la vitesse de rotation provisoire (310) et une information concernant le courant (433) qui produit un couple du rotor de la machine à champ tournant et à déterminer sur la base de celui-ci la vitesse de rotation (410) observée, dans lequel la position du rotor (412) est déterminée sur la base du secteur (331), du sens de rotation (332) et de la vitesse de rotation (410).

2. Procédé selon la revendication 1, dans lequel, lors de l'étape de détermination (767), la position du rotor (412) est déterminée sur la base d'une totalisation de la vitesse de rotation (410).

3. Procédé pour la détermination de la position du rotor et de la vitesse de rotation d'une machine à champ tournant, comprenant les étapes consistant à :

déterminer (763) un secteur (331) dans lequel se trouve un rotor (102) de la machine à champ tournant sur la base de signaux de capteurs Hall (205, 206, 207), dans lequel les signaux de capteurs Hall représentent des signaux délivrés par des capteurs Hall (105, 106, 107) disposés dans la zone du rotor ; déterminer (765) une vitesse de rotation provisoire (310) de la machine à champ tournant sur la base des signaux de capteurs Hall ; et déterminer (767) la position du rotor (612) et la vitesse de rotation (410) sur la base du secteur et de la vitesse de rotation provisoire, dans lequel, au moins pour la détermination de la vitesse de rotation, un observateur (626) de la machine à champ tournant est utilisé, comprenant une étape de détermination d'une accélération (634) du rotor (102) sur la base des signaux de capteurs Hall (205, 206, 207) et lors de laquelle, au cours de l'étape de détermination (767), la position du rotor (612) et la vitesse de rotation (410) sont déterminées par utilisation de l'observateur (626) et sur la base du secteur (331), de la vitesse de rotation provisoire (310) et de l'accélération (634), dans lequel l'observateur (626) est apte à recevoir l'accélération (634), la vitesse de rotation provisoire (310) et le secteur (331) et à délivrer la position du rotor (612) et la vitesse de rotation (410).

4. Procédé selon la revendication 3, dans lequel, lors de l'étape de détermination (767), la position du rotor (612) et la vitesse de rotation (410) sont déterminées lors d'un changement de secteur (331) sur la base du secteur (331) et de la vitesse de rotation provisoire (310) et sinon, sur la base d'une position du rotor (612) déterminée par utilisation de l'observateur (626) et renvoyée, et d'une vitesse de rotation (410) déterminée par utilisation de l'observateur et renvoyée.

5. Procédé selon l'une des revendications précédentes, comprenant une étape de réception et de détermination de plausibilité (320 ; 761) des signaux de capteurs Hall (205, 206, 207).

6. Procédé selon l'une des revendications précédentes, dans lequel, lors de l'étape de détermination (763) du secteur, le secteur (331) est déterminé sur la base d'une séquence temporelle des signaux de capteurs Hall (205, 206, 207) et lors de l'étape de détermination (765) de la vitesse de rotation provisoire (310), la vitesse de rotation provisoire est déterminée à partir d'une différence temporelle entre des fronts successifs des signaux de capteurs Hall.

7. Dispositif de détermination de la position du rotor (412) et de la vitesse de rotation (410) d'une machine à champ tournant, dans lequel le dispositif comporte les éléments caractéristiques suivants :

   un dispositif de détermination (763) d'un secteur (331) dans lequel se trouve un rotor (102) de la machine à champ tournant, sur la base de signaux de capteurs Hall (205, 206, 207), dans lequel les signaux de capteurs Hall représentent des signaux délivrés par des capteurs Hall (105, 106, 107) disposés dans la zone du rotor ;
   un dispositif de détermination (765) d'une vitesse de rotation provisoire (310) de la machine à champ tournant sur la base des signaux de capteurs Hall ;
   un dispositif de détermination d'un sens de rotation (332) du rotor (102) sur la base des signaux de capteurs Hall (205, 206, 207) ; et
   un dispositif de détermination (767) de la position du rotor (412) et de la vitesse de rotation (410) sur la base du secteur et de la vitesse de rotation provisoire, dans lequel le dispositif de détermination de la position du rotor (412) et de la vitesse de rotation (410) comporte un observateur (426) qui est apte, au moins pour la détermination de la vitesse de rotation, à déterminer la vitesse de rotation au moyen de la vitesse de rotation provisoire (310) et un courant (433) qui produit un couple du rotor de la machine à champ tournant, et dans lequel la position du rotor (412) est déterminée sur la base du secteur (331), du sens de rotation (332) et de la vitesse de rotation (410).

8. Dispositif de détermination de la position du rotor (612) et de la vitesse de rotation (410) d'une machine à champ tournant, dans lequel le dispositif comporte les éléments caractéristiques suivants :

   un dispositif de détermination (763) d'un secteur (331) dans lequel se trouve un rotor (102) de la machine à champ tournant, sur la base de signaux de capteurs Hall (205, 206, 207), dans lequel les signaux de capteurs Hall représentent des signaux délivrés par des capteurs Hall (105, 106, 107) disposés dans la zone du rotor ;
   un dispositif de détermination (765) d'une vitesse de rotation provisoire (310) de la machine à champ tournant sur la base des signaux de capteurs Hall ;
   un dispositif de détermination d'un sens de rotation (332) du rotor (102) sur la base des signaux de capteurs Hall (205, 206, 207) ; et
   un dispositif de détermination (767) de la position du rotor (612) et de la vitesse de rotation (410) sur la base du secteur et de la vitesse de rotation provisoire, dans lequel, au moins pour la détermination de la vitesse de rotation, un observateur (426 ; 626) de la machine à champ tournant est utilisé et la vitesse de rotation (410) est déterminée par utilisation de l'observateur (426) sur la base de la vitesse de rotation provisoire (310) ;
   un dispositif de détermination d'une accélération (634) du rotor (102) sur la base des signaux du capteurs Hall (205, 206, 207) ;
   dans lequel l'observateur (626) est apte à recevoir l'accélération (634), la vitesse de rotation provisoire (310) et le secteur (331) et à délivrer la position du rotor (612) et la vitesse de rotation (410).

9. Machine à champ tournant comportant les éléments caractéristiques suivants :

   un rotor (102) ;
   un stator (104) comprenant au moins trois capteurs Hall (105, 106, 107), dans laquelle chacun des capteurs Hall est apte à détecter une direction d'un champ magnétique du rotor et à délivrer un signal de capteur Hall (205, 206, 207) en fonction de ladite direction ; et
   un dispositif selon la revendication 7 ou 8 pour la détermination de la position du rotor et de la vitesse de rotation d'une machine à champ tournant sur la base des signaux de capteurs Hall délivrés par lesdits au moins trois capteurs Hall.

10. Produit de programme d'ordinateur comprenant un code de programme pour la mise en oeuvre du procédé selon l'une des revendications 1 à 6 lorsque le programme est exécuté sur un dispositif selon l'une des revendications 7 ou 8.

**FIG. 1**

**FIG. 2**

**FIG. 3**

**FIG. 4**

FIG. 5

205
206
207

320 → 622 → 310 / 331 → 628 → 626 → 612
634
410

**FIG. 6**

761
↓
763
↓
765
↓
767

**FIG. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112008001818 T5
- DE 19949106 A1
- DE 19735581 A1

**In der Beschreibung aufgeführte Nicht-Patentliteratur**

- A new cost effective solution for control of electrical actuators. **STIKA I C et al.** ADVANCED TOPICS IN ELECTRICAL ENGINEERING (ATEE), 2011 7TH INTERNATIONAL SYMPOSIUM ON. IEEE, 12. Mai 2011, 1-4

- Analysis and experimental validation of a sensor-based event-driven controller. **SANDEE J H et al.** AMERICAN CONTROL CONFERENCE, 2007. ACC '07. IEEE, 09. Juli 2007, 2867-2874